# EUROPÄISCHE PATENTANMELDUNG

(11) **EP 0 553 610 A1**
(43) Veröffentlichungstag der Anmeldung: **04.08.1993**
(21) Anmeldenummer: 93100069.9
(22) Anmeldetag: 05.01.1993
(51) Int. Cl.: H04L 7/00, H04J 3/12

(54) **Verfahren zur Synchronisierung von Schaltungsteilen einer Telekommunikationsanlage**

(30) Priorität: 29.01.1992 DE 4202341
(71) Anmelder: SIEMENS AKTIENGESELLSCHAFT, D-80333 München (DE)
(72) Erfinder: Diekmann, Thomas, Dipl.-Ing., W-Paderborn (DE)

(57) **Zusammenfassung**

Die Erfindung betrifft ein Verfahren zur Synchronisierung von Schaltungsteilen einer digitalen Telekommunikationsanlage mit mindestens einer zentralen Taktgeneratoranordnung, die mit den Synchronisier- und Taktausfallüberwachungseinrichtungen der Schaltungsteile über eine Bittaktleitung und eine Rahmentaktleitung verbunden ist. Eine von der Taktgeneratoranordnung erzeugte und auf der Rahmentaktleitung abgegebene erste vorbestimmte, wenigstens zwei Bit lange Folge von Signalzuständen wird den Synchronisiereinrichtungen der zu synchronisierenden Schaltungsteile als ein Rahmensynchronwort erkannt, und zwischen aufeinanderfolgenden Rahmensynchronworten wird eine von der ersten vorbestimmten Folge verschiedene zweite Folge von wechselnden Signalzuständen übertragen, die zur Nachtriggerung der Taktausfallüberwachungseinrichtungen dient.Dies führt zu einem häufigeren Zustandswechsel auf der Rahmentaktleitung, der von den Taktausfallüberwachungseinrichtungen zu einer schnelleren Ausfall- bzw. Fehlererkennung genutzt werden kann.

## Beschreibung

Die Erfindung betrifft ein Verfahren zur Synchronisierung von Schaltungsteilen einer digitalen Telekommunikationsanlage mit mindestens einer zentralen Taktgeneratoranordnung, die mit den Synchronisier- und Taktausfallüberwachungseinrichtungen der Schaltungsteile über eine Bittaktleitung und eine Rahmentaktleitung verbunden ist.

In digitalen Telekommunikationsanlagen werden Teilnehmeranschlußleitungen und Amtsverbindungsleitungen über entsprechende Anschlußschaltungen mit einem digitalen Koppelfeld verbunden. Diese Verbindungen zum digitalen Koppelfeld erfolgen über im zeitmultiplex betriebene Leitungen. Diese Zeitmultiplexleitungen haben eine Rahmenstruktur, in der sich Zeitfenster, innerhalb deren die angeschlossenen Schaltungsteile auf die Leitung zugreifen dürfen, regelmäßig in aufeinanderfolgenden Zeitrahmen wiederholen. Der Zugriff auf diese Zeitmultiplexleitung muß sowohl bitsynchron als auch rahmensynchron erfolgen um Störungen des Dateninhalts bzw. von benachbarten Zeitfenstern zu vermeiden.

Dazu wird innerhalb der Telekommunikationsanlage auf einer Bittaktleitung und einer Rahmentaktleitung ein Bittakt und ein Rahmentakt an alle zu synchronisierenden Schaltungsteile verteilt, der von einer zentralen Taktgeneratoranordnung erzeugt wird.

Innerhalb der Schaltungsteile sind Synchronisierungsschaltungen vorgesehen, die die schaltungsinternen Taktsignale auf den Bit- und Rahmentakt synchronisieren und alle intern erforderlichen Taktsignale aus dem Bit- bzw. Rahmentakt ableiten.

Ist eine der Taktverbindungen zu einem Schaltungsteil gestört oder ausgefallen, kann nicht mehr auf den Bit- oder Rahmentakt synchronisiert werden. Dies kann zu fehlerhaften Zugriffen auf die Zeitmultiplexleitungen und damit zur Störung der eigenen und anderer Verbindungen führen.

Um dies zu vermeiden hat jeder Schaltungsteil Taktausfallüberwachungseinrichtungen, die den Bittakt und Rahmentakt auf Störungen hin überwachen. Erkennt eine Taktausfallüberwachungseinrichtung eine Störung, wird innerhalb des betroffenen Schaltungsteils zumindest der Zugriff auf Zeitmultiplexleitungen unterbunden.

Durch die geringe Folgefrequenz des Rahmentaktes von beispielsweise 8 kHz kann dessen Ausfall erst nach einer für die interne Datenübertragung relativ langen Zeit sicher festgestellt werden. Bis zu diesem Zeitpunkt können bereits fehlerhafte Zugriffe auf eine Zeitmultiplexleitung erfolgt sein.

Es ist daher Aufgabe der Erfindung ein Verfahren anzugeben, mit dem eine Störung eines Rahmentaktsignals möglichst schnell erkannt werden kann.

Diese Aufgabe löst die Erfindung dadurch, daß eine von der Taktgeneratoranordnung erzeugte und auf der Rahmentaktleitung abgegebene erste vorbestimmte, wenigstens zwei Bit lange Folge von Signalzuständen von den Synchronisiereinrichtungen der zu synchronisierenden Schaltungsteile als ein Rahmensynchronwort erkannt wird, und daß zwischen aufeinanderfolgenden Rahmensynchronworten eine von der ersten vorbestimmten Folge verschiedene zweite Folge von wechselnden Signalzuständen übertragen wird, die zur Nachtriggerung der Taktausfallüberwachungseinrichtungen dient.

Der Rahmentakt wird durch ein Rahmensynchronwort und eine dazwischenliegende Folge von wechselnden Signalzuständen gebildet. Dies führt zu einem häufigeren Zustandswechsel auf der Rahmentaktleitung, der von den Taktausfallüberwachungseinrichtungen zu einer schnelleren Ausfall- bzw. Fehlererkennung genutzt werden kann.

Das Rahmensynchronwort kann von den Synchronisiereinrichtungen durch einfachen Vergleich der Signalfolge auf der Rahmentaktleitung mit der vorbestimmten Folge erkannt werden und schaltungsintern in ein Rahmentaktsignal umgesetzt werden.

Vorzugsweise wird für die Rahmentaktleitung eine flankengesteuerte Taktausfallüberwachungseinrichtung verwendet, deren Ansprechzeit für eine Fehlererkennung durch die Maximaldauer zwischen zwei gleichartigen Signalzustandswechseln auf der Rahmentaktleitung bestimmt wird.

Flankengesteuerte Taktausfallüberwachungseinrichtungen sind besonders einfach zu realisieren, und die Ansprechezeit ist durch das erfindungsgemäße Rahmentaktsignal erheblich geringer als die Zeit, die sich aus der Folgefrequenz des Rahmentaktes beim Stand der Technik ergeben würde.

Die kürzeste Ansprechzeit für die Fehlererkennung wird erreicht, wenn der Signalzustand der zweiten Folge, die zwischen aufeinanderfolgenden Rahmensynchronworten übertragen wird, mit jedem Bittakt wechselt. Dann wird die Maximaldauer durch die Signalzustandswechsel vor bzw. nach dem mindestens zwei Bit langen Rahmensynchronwort bestimmt.

Vorzugsweise wird ein acht Bit langes Rahmensynchronwort verwendet. Dies entspricht der Länge eines Wortes bzw. Zeitfensters auf den Zeitmultiplexleitungen und es läßt sich ein Rahmensynchronwort bilden, das eine ausreichende Hammingdistanz zur zwischen den Rahmensynchronworten übertragenen zweiten Folge aufweist.

In gleicher Weise kann auch die zweite Folge, die zwischen aufeinanderfolgenden Rahmensynchronworten übertragen wird, aus einer Folge gleichartig aufgebauter Acht-Bit-Worte bestehen.

In einer Weiterbildung der Erfindung wird jeweils ein Bit dieser Acht-Bit-Worte zur Statusinformationsübertragung verwendet.

Ohne wesentliche Veränderung der Ansprechzeit der Taktausfallüberwachungseinrichtung kann ein Bit zur Übertragung von Statusinformationen von der Taktgeneratoranordnung zu allen mit der Rahmentaktleitung verbunden Schaltungsteilen verwendet werden.

Dabei kann es sich um Statusinformationen handeln, deren Inhalt sich nur selten ändert und die im Zusammenhang mit der Taktversorgung oder anderen Systemzuständen steht.

Insbesondere bei redundantem Aufbau der Telekommunikationsanlage, der eine Umschaltung zwischen gedoppelten Schaltungsteilen und Zeitmultiplexleitungen ermöglicht, können Informationen zum aktuellen Zustand als Statusinformationen übertragen werden.

Im folgenden wird die Erfindung an Hand eines Ausführungsbeispiels näher erläutert. Es zeigen:
- Fig. 1: ein Blockschaltbild einer Telekommunikationsanlage mit redundantem Aufbau;
- Fig. 2: Zeitdiagramme des Bittakt- und Rahmentaktsignals;
- Fig. 3: Zeitdiagramme zur Ermittlung der Ansprechzeit der Taktüberwachungseinrichtung.

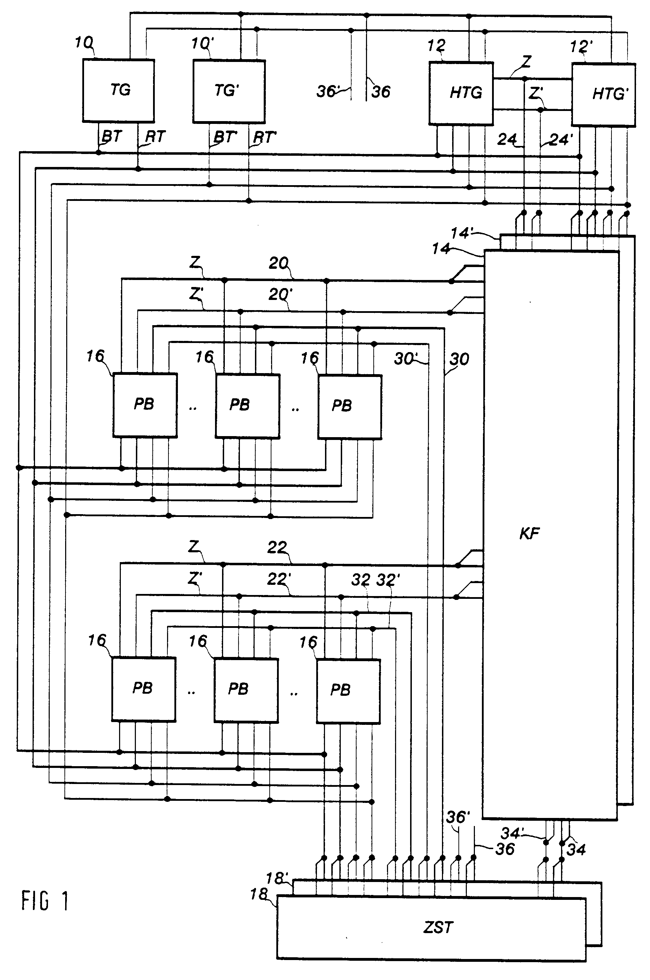

Fig.1 zeigt ein Blockschaltbild einer Telekommunikationsanlage mit redundantem Aufbau, bei der die von mehreren Schaltungsteilen gemeinsam für den Verbindungsaufbau erforderlichen Schaltungsteile und Verbindungsleitungen gedoppelt sind.

Eine erste Taktgeneratoranordnung 10 ist über eine Bittaktleitung BT und eine Rahmentaktleitung RT mit einem Hörtongenerator 12, einem redundanten Hörtongenerator 12', einem digitalen Koppelfeld 14, einem redundanten digitalen Koppelfeld 14', den Anschlußbaugruppen 16, einer zentralen Steuerung 18 und einer redundanten zentralen Steuerung 18' verbunden.

Eine redundante Taktgeneratoranordnung 10' ist über eine zweite Bittaktleitung BT' und eine zweite Rahmentaktleitung RT' mit dem Hörtongenerator 12, dem redundanten Hörtongenerator 12', dem digitalen Koppelfeld 14, dem redundanten digitalen Koppelfeld 14', den Anschlußbaugruppen 16, der zentralen Steuerung 18 und der redundanten zentralen Steuerung 18' verbunden.

Die Anschlußbaugruppen 16 und die Hörtongeneratoren 12, 12' sind über erste Zeitmultiplexleitungen 20, 22, 24 sowie redundante Zeitmultiplexleitungen 20', 22', 24' mit dem digitalen Koppelfeld 14 und dem redundanten digitalen Koppelfeld 14' verbunden.

Die Teilnehmeranschlußleitungen über die die Teilnehmerendeinrichtungen an die Artschlußbaugruppen angeschlossen sind, wurden aus Übersichtlichkeitsgründen nicht dargestellt.

Zur Verbindungssteuerung sind die Anschlußbaugruppen 16 über ebenfalls im Zeitmultiplex betriebene Steuerleitungen 30, 32, sowie redundante Steuerleitungen 30' ,32' mit der zentralen Steuerung 18 und der redundanten zentralen Steuerung 18' verbunden.

Zur Steuerung der Koppelfelder 14, 14' sind diese über Steuerleitungen 34, 34' mit den zentralen Steuerungen 18, 18' verbunden. Zum Austausch von Systemdaten sind die Taktgeneratoranordnungen 10, 10' und die Hörtongeneratoren 12, 12 über Steuerleitungen 36, 36' mit den zentralen Steuerungen 18, 18' verbunden.

Eine mit diesen redundanten Schaltungsteilen ausgeführte Telekommunikationsanlage weist eine höhere Verfügbarkeit auf, da bei Ausfällen bzw. Störungen zwischen den redundanten Schaltungsteilen umgeschaltet werden kann. Dazu verfügt jeder Schaltungsteil über Überwachungseinrichtungen für die eigene Funktionsfähigkeit sowie für die angeschlossenen Verbindungsleitungen. Melden diese Überwachungseinrichtungen einen Fehler, kann der betroffene Schaltungsteil selbst oder die zentrale Steuerung eine Umschaltung in die andere Redundanzebene durchführen.

Zu den überwachten Verbindungsleitungen zählen auch die Bittakt- und die Rahmentaktleitung, die zur Synchronisierung aller Schaltungsteile, insbesondere für den Zugriff auf die Zeitmultiplexleitungen 20, 22, 24, 20', 22', 24' und die Steuerleitungen 30, 32, 34, 36, 30', 32', 34', 36' dienen. In den angeschlossenen Schaltungsteilen 12, 12', 14, 14', 16, 18, 18' wird jeweils die Bittaktleitung BT und die Rahmentaktleitung RT bzw. die redundante Bittaktleitung BT' und Rahmentaktleitung RT' zur Synchronisierung ausgewählt.

Die Zeitmultiplexleitungen 20, 20', 22, 22', 24, 24' arbeiten mit einer Rahmenstruktur, die in diesem Ausführungsbeispiel bei einem Bittakt von 8 192 kHz und einem Rahmentakt mit 8 kHz Wiederholfrequenz 128 Zeitfenster zu je 8 Bit zur Signalübertragung zur Verfügung stellt.

Die im Zeitmultiplex betriebenen Steuerleitungen 30, 30', 32, 32', 34, 34', 36, 36' arbeiten ebenfalls mit einer Rahmenstruktur, die für dieses Ausführungsbeispiel bei einem Bittakt von 1 024 kHz und einem Rahmen mit 8 kHz Wiederholfrequenz 16 Zeitfenster zur Verbindungssteuerung zur Verfügung stellt. Der Bittakt wird durch schaltungsinterne Teiler vom Takt auf der Bittaktleitung BT bzw. BT' abgeleitet.

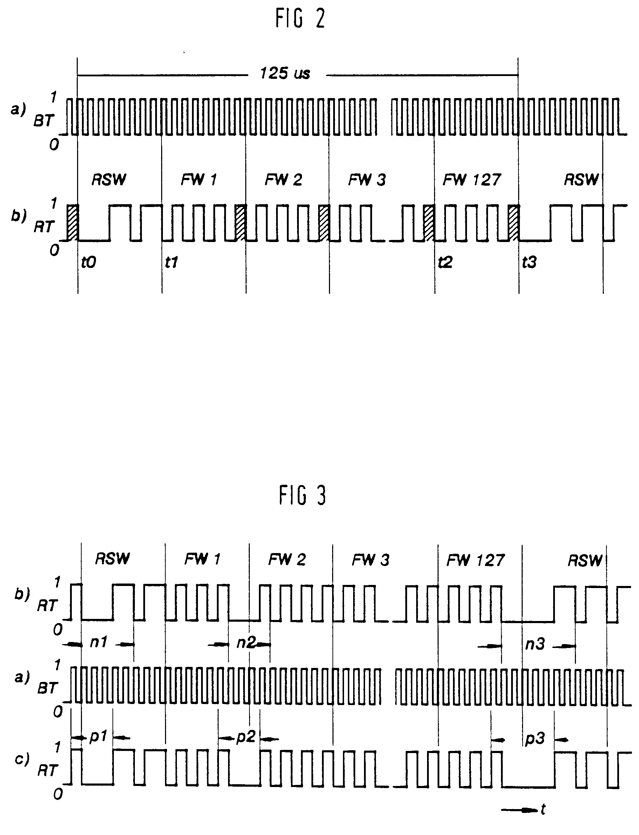

Fig. 2a und 2b zeigen den auf der Bittaktleitung BT übertragenen Bittakt von 8 192 kHz und die auf der Rahmentaktleitung RT übertragenen Signalfolgen.

Zum Zeitpunkt t0 beginnt die erste Folge, die das Rahmensynchronwort RSW darstellt. In diesem Ausführungsbeispiel wird als Rahmensynchronwort RSW die Folge "0001 1011" verwendet. Zum Zeitpunkt t1 schließt sich daran die zweite Folge mit wechselnden Signalzuständen an, die in diesem Ausführungsbeispiel aus einer Folge von 127 Acht-Bit-Worten FW1, FW2, FW3, FW127, mit dem Inhalt "0101 010x" besteht. An der Bitposition x, die in Fig.2a schraffiert dargestellt ist, können in den aufeinanderfolgenden Worten unterschiedliche Statusinformationen von der sendenden Taktgeneratoranordnung zu den angeschlossenen Schaltungsteilen übertragen werden.

So kann der Inhalt der Bitpositionen x der Worte FW die folgende Bedeutung haben:

| Wort FWn Inhalt "0" | | Inhalt "1" |
|---|---|---|
| FW1 | TG defekt | TG ok |
| FW2 | TG ist Slave | TG ist Master |
| FW3 | Slave/Master async | Slave/Master synchr |
| FW4 | HTG defekt | HTG ok |
| FW5 | HTG' defekt | HTG' ok |
| FW6 | KF defekt | KF ok |
| FW7 | KF' defekt | KF' ok |
| FW8 | Steuerl. n defekt | Steuerleitung n ok |
| FW9 | Steuerl. n' defekt | Steuerleitung n' ok |

Anhand dieser Statusinformationen kann jeder an die Rahmentaktleitung angeschlossene Schaltungsteil für eventuelle Umschaltungen auf eine redundante Funktion mit den erforderlichen Systemdaten versorgt werden.

Über alle Statusinformationen enthaltende x-Bits wird ein CRC-Zeichen gebildet, das in den letzten x-Bits übertragen wird und das von den Empfängern ausgewertet werden kann. Nur wenn das übertragene und das im Empfänger ermittelte CRC-Zeichen übereinstimmen, liegt eine fehlerfreie Datenübertragung vor und es können interne Steuervorgänge aufgrund der Dateninhalte ausgelöst werden.

In Fig. 3 sind Zeitdiagramme zur Ermittlung der Ansprechzeit einer flankengetriggerten Taktüberwachungseinrichtung dargestellt. In Fig. 3a ist der Bittakt BT als Maßstab für die erforderlichen Zeiten dargestellt. In Fig.3b und 3c ist das Rahmentaktsignal aus Fig.2b mit festen Werten zur Ermittlung der maximalen Ansprechzeit dargestellt.

Fig.3b gilt für eine Taktüberwachungseinrichtung, die mit der fallenden Signalflanke nachgetriggert wird. Das erste Rahmensynchronwort RSW beginnt mit einer fallenden Flanke, der nach der Zeit n1 (5 Bitperioden) die nächste fallende Flanke folgt. Innerhalb der Folge von acht Bit Worten FW entsteht die längste Lücke zwischen den Signalflanken, wenn das x-Bit den Wert "0" aufweist. Dies ist für das Wort FW1 der Fall. Von der letzten fallenden Signalflanke des Wortes FW1 bis zur ersten fallenden Signalflanke des Wortes FW2 vergeht die Zeit n2 (4 Bitperioden). Das letzte x-Bit vor dem Rahmensynchronwort hat ebenfalls den Wert "0". Damit vergeht von der letzten fallenden Signalflanke des Wortes FW127 bis zur ersten fallenden Signalflanke des Rahmensynchronwortes RSW die Zeit n3 (7 Bitperioden). Die Zeit n3 ist als längste vorkommende Zeit als Ansprechzeit für die Taktüberwachungseinrichtung maßgeblich. Für einen Bittakt von 8 192 kHz entsprechen 7 Bitperioden einer Zeit von 855 ns. Diese Zeit ist erheblich kürzer als die 125 us eines Rahmens.

Fig.3c gilt für eine Taktüberwachungseinrichtung, die mit der steigenden Signalflanke nachgetriggert wird. Ausgehend von der letzten steigenden Flanke vor dem ersten Rahmensynchronwort folgt nach einer Zeit p1 (4 Bitperioden) die erste steigende Flanke im Rahmensynchronwort RSW. Innerhalb der Folge von Acht-Bit-Worten FW entsteht die längste Lücke zwischen den Signalflanken, wenn das x-Bit den Wert "0" aufweist. Dies ist für das Wort FW1 der Fall. Von der letzten steigenden Signalflanke des Wortes FW1 bis zur ersten steigenden Signalflanke des Wortes FW2 vergeht die Zeit p2 (4 Bitperioden). Das letzte x-Bit vor dem Rahmensynchronwort hat ebenfalls den Wert "0". Damit vergeht von der letzten steigenden Signalflanke des Wortes FW127 bis zur ersten steigenden Signalflanke des Rahmensynchronwortes RSW die Zeit p3 (6 Bitperioden). Die Zeit p3 ist als längste vorkommende Zeit als Ansprechzeit für die Taktüberwachungeinrichtung maßgeblich. Für einen Bittakt von 8 192 kHz entsprechen 6 Bitperioden einer Zeit von 732 ns. Diese Zeit ist erheblich kürzer als die 125 us eines Rahmens.

## Patentansprüche

1. Verfahren zur Synchronisierung von Schaltungsteilen einer Telekommunikationsanlage mit mindestens einer zentralen Taktgeneratoranordnung, die mit den Synchronisier- und Taktausfallüberwachungseinrichtungen der Schaltungsteile über eine Bittaktleitung und eine Rahmentaktleitung verbunden ist, **dadurch gekennzeichnet,** daß eine von der Taktgeneratoranordnung erzeugte und auf der Rahmentaktleitung abgegebene erste vorbestimmte, wenigstens zwei Bit lange Folge von Signalzuständen von den Synchronisiereinrichtungen der zu synchronisierenden Schaltungsteile als ein Rahmensynchronwort erkannt wird, und daß zwischen aufeinanderfolgenden Rahmensynchronworten eine von der ersten vorbestimmten Folge verschiedene zweite Folge von wechselnden Signalzuständen übertragen wird, die zur Nachtriggerung der Taktausfallüberwachungseinrichtungen dient.

2. Verfahren nach Anspruch 1, dadurch gekennzeichnet, daß eine flankengetriggerte Taktausfallüberwachungseinrichtung verwendet wird, deren Ansprechzeit durch die Maximaldauer zwischen zwei gleichartigen Signalzustandswechseln auf der Rahmentaktleitung bestimmt wird.

3. Verfahren nach Anspruch 1, **dadurch gekennzeichnet,** daß der Signalzustand der zweiten Folge, die zwischen aufeinanderfolgenden Rahmensynchronworten übertragen wird, mit jedem Bittakt wechselt.

4. Verfahren nach einem der vorhergehenden Ansprüche, **dadurch gekennzeichnet,** daß ein acht Bit langes Rahmensynchronwort verwendet wird.

5. Verfahren nach Anspruch 4, **dadurch gekennzeichnet,** daß als Rahmensynchronwort die Folge "0001 1011" verwendet wird.

6. Verfahren nach einem der vorhergehenden Ansprüche, **dadurch gekennzeichnet,** daß die zweite Folge, die zwischen aufeinanderfolgenden Rahmensynchronworten übertragen wird, aus einer Folge von gleichartig zusammengesetzten acht Bit Worten besteht.

7. Verfahren nach Anspruch 6, **dadurch gekennzeichnet,** daß jeweils ein Bit dieser Acht-Bit-Worte zur Statusinformationsübertragung verwendet werden kann.

8. Verfahren nach Anspruch 7, **dadurch gekennzeichnet,** daß die Acht-Bit-Worte aus der Folge "0101 010x" bestehen, wobei x das Bit kennzeichnet, das zur Statusinformationsübertragung verwendet werden kann.

9. Verfahren nach Anspruch 7 oder 8, **dadurch gekennzeichnet**, daß aus den übertragenen n-m Statusinformationen ein CRC-Zeichen gebildet und übertragen wird, wobei n die Anzahl der Acht-Bit-Worte zwischen aufeinanderfolgenden Rahmensynchronworten und m die Länge des CRC-Zeichens angibt.
